# NEUE EUROPÄISCHE PATENTSCHRIFT

(11) **EP 1 848 903 B2**
(45) Veröffentlichungstag und Bekanntmachung des Hinweises auf die Entscheidung über den Einspruch: **04.10.2017**
(45) Hinweis auf die Patenterteilung: 01.08.2012
(21) Anmeldenummer: 06743034.8
(22) Anmeldetag: 23.05.2006
(51) Int. Cl.: F16H 61/22, F16H 59/04

(54) **ELEKTRISCHE SCHALTEINRICHTUNG FÜR EIN KRAFTFAHRZEUG**
ELECTRIC CIRCUIT ARRANGEMENT FOR A MOTOR VEHICLE
DISPOSITIF ELECTRIQUE DE CHANGEMENT DE VITESSE POUR UN VEHICULE AUTOMOBILE

(30) Priorität: 24.05.2005 DE 102005023926
(43) Veröffentlichungstag der Anmeldung: 31.10.2007
(73) Patentinhaber: Leopold Kostal GmbH & Co. KG, 58507 Lüdenscheid (DE)
(72) Erfinder: MOLKOW, Peter, 44265 Dortmund (DE); LUKSCH, Thomas, 58579 Schalksmühle (DE); BÖBEL, Ralf, 59439 Holzwickede (DE)
(86) Internationale Anmeldenummer: PCT/EP2006/004899
(87) Internationale Veröffentlichungsnummer: WO 2006/125608

(56) Entgegenhaltungen:
- EP-A- 0 589 145
- EP-A1- 1 541 903
- EP-A2- 0 589 145
- WO-A1-02/33290
- DE-A1- 10 005 328
- DE-A1- 10 059 383
- JP-A- H0 483 960
- JP-U1- S56 141 826
- US-A- 4 473 141
- US-A1- 2003 188 594
- PATENT ABSTRACTS OF JAPAN Bd. 1998, Nr. 05, 30. April 1998 (1998-04-30) & JP 10 016593 A (TOKAI RIKA CO LTD), 20. Januar 1998 (1998-01-20)

## Beschreibung

Die Erfindung betrifft eine elektrische Schalteinrichtung für ein Kraftfahrzeug, mit einem Schalthebel und mit einem elektrischen Aktuator, der dadurch, dass in mindestens einem Betätigungsweg des Schalthebels ein Begrenzungselement angeordnet ist, dessen Ausdehnung innerhalb eines Betätigungsweges des Schalthebels durch den Aktuator veränderbar ist, einen Schaltanschlag für den Schalthebel in bzw. außer Kraft setzen kann.

Derartige Schalteinrichtungen werden bei Kraftfahrzeugen eingesetzt, die mit einem automatisierten Schaltgetriebe ausgerüstet sind. Dabei wird der eigentliche Schaltvorgang elektrohydraulisch oder elektromotorisch vorgenommen, während der jeweilige Schaltwunsch des Fahrers elektrisch oder elektronisch erfaßt wird. Dem Fahrer stehen bei einem solchen automatisierten Schaltgetriebe die elektrische Schalteinrichtung mit einem Schalthebel und gegebenenfalls zusätzlichen, etwa am Lenkrad angeordneten Wippschaltern zum Herauf- und Herunterschalten zur Verfügung.

Der Schalthebel einer solchen Schalteinrichtung kann multistabil oder auch monostabil ausgeführt sein, daß heißt er kann entweder in mehrere feste Positionen einstellbar sein oder er besitzt, ähnlich einem Joystick nur eine stabile Ruheposition, in die der Schalthebel aus mehreren instabilen Stellpositionen immer wieder zurückfällt.

In beiden Fällen ist es wünschenswert oder sogar erforderlich, in Abhängigkeit vom aktuell gewählten Schaltzustand, jeweils bestimmte Schaltzustände von der nächsten Auswahl auszuschließen. Vorteilhaft ist es beispielsweise bei einer linearen Kette möglicher Schaltzustände, anzuzeigen, wenn die Auswahlmöglichkeiten in einer Schaltrichtung erschöpft sind.

Da im allgemeinen nicht nur die Erfassung sondern auch die Verarbeitung der jeweiligen Schaltzustände auf elektrischem oder elektronischem Weg abläuft, kann und wird im allgemeinen der Ausschluß bestimmter Umschaltmöglichkeiten durch die zugrundeliegende Schaltlogik erfolgen. Allerdings ist es aus ergonomischen Gründen vorteilhaft, wenn der Bediener der Schalteinrichtung auch eine unmittelbare haptische Rückmeldung über derzeit nicht auswählbare Schaltfunktionen erhält. Eine solche Rückmeldung erhält der Fahrer eines Kraftfahrzeuges insbesondere über Sperren oder Anschläge, die mit dem Schalthebel zusammenwirken.

Aus der EP 1 464 875 A2 ist eine Schaltvorrichtung bekannt, die eine Betätigungseinrichtung aufweist, welche einen Schaltanschlag außer Kraft setzen kann, so daß der Schalthebel über die durch diesen Schaltanschlag definierte Schaltposition hinaus schwenkbar ist. Die EP 1 464 875 A2 offenbart hierzu eine relativ komplex aufgebaute Kipphebelanordnung, die durch einen Aktuator betätigt wird.

Aus der EP 0 589 145 A2 ist eine Schalteinrichtung mit den Merkmalen des Oberbegriffs des Patentanspruchs 1 bekannt, bei der senkrecht zu der zu sperrenden Bewegungsrichtung des Schalthebels durch Hubmagnete betätigte Stößel in dessen Betätigungsweg hineingeschoben werden.

DE 100 59 383 A1 zeigt eine Anordnung zum Sperren einer Automatik-Wähleinrichtung, bei der zum Blockieren der Bewegung eines Wählhebels eine Sperrklinke in eine mit dem Wählhebel verbundene Sperrkulisse eingreift. Die Bewegung der Sperrklinke wird dabei durch einen Kniehebelmechanismus bewirkt, der durch eine exzentrisch ausgebildete Kurvenscheibe angesteuert wird.

Es ergab sich als Aufgabe der Erfindung, eine elektrische Schalteinrichtung zu schaffen, die es ermöglicht, durch Ansteuerung eines Aktuators den Betätigungsweg eines Schalthebels zu begrenzen, wobei die hierzu eingesetzten mechanischen Mittel möglichst einfach und kostengünstig sein sollen.

Diese Aufgabe wird erfindungsgemäß dadurch gelöst, dass der Aktuator durch eine Veränderung der Ausdehnung des Begrenzungselements innerhalb eines Betätigungsweges des Schalthebels, die Position des Schalthebels verändern kann.

Hierbei gibt es vielfältige Möglichkeiten zur Ausgestaltung des Begrenzungselementes. Insbesondere kann das Begrenzungselement ein- oder auch mehrteilig ausgebildet sein.

Ein einteilig ausgebildetes Begrenzungselement kann beispielsweise durch einen drehbar auf einer Welle angeordneten Exzenter realisiert sein. Ein zweiteiliges Begrenzungselement kann durch gegeneinander verschieblich angeordnete Schieberelemente ausgebildet sein. Des weiteren können ein oder mehrere Schieber, die in den Betätigungsweg des Schalthebels gebracht werden können, ein Begrenzungselement bilden.

Je nach vorgesehener Anwendung kann es vorteilhaft sein, wenn das Begrenzungselement mit dem Aktuator eine monostabile Anordnung bildet. Hierzu kann insbesondere eine auf das Begrenzungselement oder den Aktuator einwirkende Feder vorgesehen sein, die nach Beendigung der Ansteuerung das Begrenzungselement wieder in die Ausgangslage zurückführt.

Eine bevorzugte Anwendung einer elektrischen Schalteinrichtung besteht darin, Schaltwege eines monostabilen oder multistabilen Gangwahlschalters abhängig von der bereits eingelegten Fahrstufe zu sperren.

Vorteilhafte Ausgestaltungen und Weiterbildungen der erfindungsgemäßen Schalteinrichtung sollen anhand von schematisch dargestellten Ausführungsbeispielen anhand der Zeichnung erläutert werden.

Es zeigen:
- Figur 1: eine Schalteinrichtung mit einem Exzenter als Begrenzungselement,
- Figur 2: eine Schalteinrichtung mit einem zweiteiligen Schieber als Begrenzungselement,
- Figur 3: eine Schalteinrichtung mit mehreren Schiebern als Begrenzungselement,
- Figur 4: eine Schalteinrichtung mit den in der Figur 3 dargestellten Schiebern in mehreren Schaltstellungen.

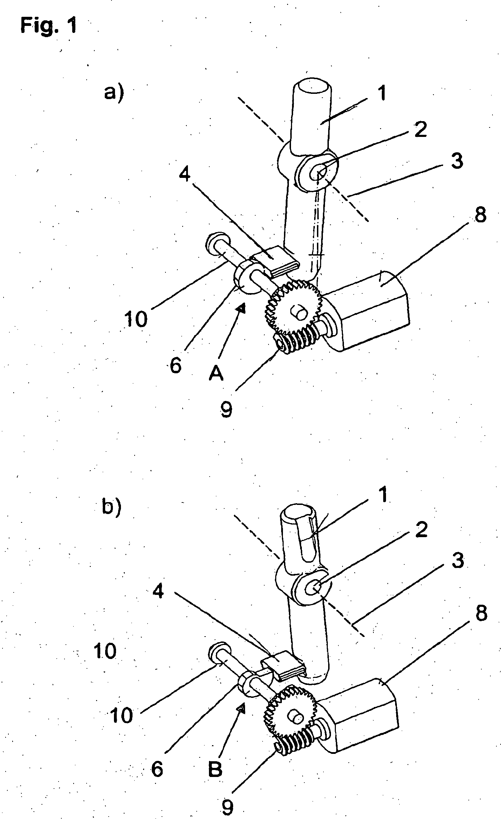

Die schematischen Darstellungen der Figuren 1 bis 4 zeigen hierbei nur die zur Erläuterung der Erfindung wesentlichen Einzelheiten der Schalteinrichtungen. In den verschiedenen Ausführungsbeispielen sind jeweils gleichwirkende Elemente mit gleichen Bezugszeichen bezeichnet.

Die Figur 1 zeigt einen Schalthebel (1) mit einer Ausnehmung (2) für eine Drehachse (3), um die herum der Schalthebel (1) verschwenkbar ist. Vorteilhaft ist es, wenn für den Schalthebel (1) weitere Bewegungsmöglichkeiten vorgesehen sind, was beispielsweise durch eine hier nicht dargestellte kardanische Lagerung des Schalthebels (1) realisierbar ist.

Bei einer Verschwenkung um die dargestellte Drehachse (3) trifft der untere Abschnitt des Schalthebels (1) in einer Betätigungsrichtung auf ein Begrenzungselement, welches hier durch einen auf einer Welle (10) angeordneten Exzenter (6) ausgebildet ist. Zur besseren mechanischen Kopplung zwischen dem Schalthebel (1) und dem Exzenter (10), sind diese über ein Zwischenstück (4) aus Kunststoff miteinander verbunden.

Ein Elektromotor (8) treibt über ein Schneckengetriebe (9) die Welle (10) mit dem Exzenter (6) an. Alternativ kann die Exzenterwelle (10) über einen Kurbeltrieb durch einen linear wirkenden Aktuator gedreht werden.

Die Exzenterwelle (10) kann über das Schneckengetriebe (9) in zwei Positionen gedreht werden. Die in der Figur 1a dargestellte Position A des Exzenters (6) entspricht der gelösten Sperre; der Exzenter (6) ist dem Schalthebel (1) abgewandt und begrenzt den Schalthebelweg nicht. Der Schalthebel (1) kann damit frei zumindest zwischen einer in Richtung auf den Exzenter ausgelenkten Schalthebelposition und der mittleren neutralen Schalthebelposition hin und her bewegt werden. Befindet sich der Exzenter (6) dagegen in der Position B, dargestellt in der Figur 1 b, so ist eine Auslenkung des Schalthebels (1) in Richtung auf den Exzenter (6) blockiert.

Die dargestellte Begrenzungsvorrichtung wirkt somit auf genau eine Betätigungsrichtung des Schalthebels (1) begrenzend ein; selbstverständlich können bedarfsweise für weitere Betätigungsrichtungen des Schalthebels (1) weitere Begrenzungsvorrichtungen vorgesehen werden.

Vorteilhaft ist, daß durch den Aktuator (8) zusätzlich eine Möglichkeit zur automatischen Rückstellung des Schalthebels (1) in die neutrale mittlere Position realisiert werden kann. Es sei angenommen, der Schalthebel (1) sei derart gelagert, daß er seine möglichen Schaltpositionen rastend einnimmt. Weiter sei angenommen, der Schalthebel (1) befände sich in der in der Figur 1 a dargestellten ausgelenkten Schalthebelstellung und der Exzenter (6) entsprechend in der Position A. Wird die Exzenterwelle (10) nun über das Schneckengetriebe (9) in die Position B gedreht, welche die Figur 1 b zeigt, so bewegt der Exzenter (6) den Schalthebel (1) über das Zwischenstück (4) in seine neutrale Schalthebelposition zurück.

Wird dabei der Exzenter (6) über die Position B hinaus weiter bis in die Position A gefahren, so gibt der Exzenter (6) über das Zwischenstück (4) den Schalthebel (1) wieder frei und ermöglicht eine freie Betätigung des Schalthebels (1).

Bleibt der Exzenter( 6) dagegen in der Position B stehen so, bleibt die Betätigung des Schalthebels (1) in Richtung auf den Exzenter (6) gesperrt. Die von der Sperre aufzunehmenden Kräfte werden von einer neben dem Exzenter (6) liegenden Lagerstellen der Exzenterwelle (10) aufgenommen.

Charakteristisch für diese Schalteinrichtung ist, daß bei fehlender Stromzufuhr zum Aktuator (8), der Bediener die eingelegte Sperre aufgrund der Selbsthemmung des Schneckegetriebes (9) nicht mehr lösen kann. Die Bewegungsfreiheit des Schalthebels (1) bleibt in einem solchen Fall daher eingeschränkt.

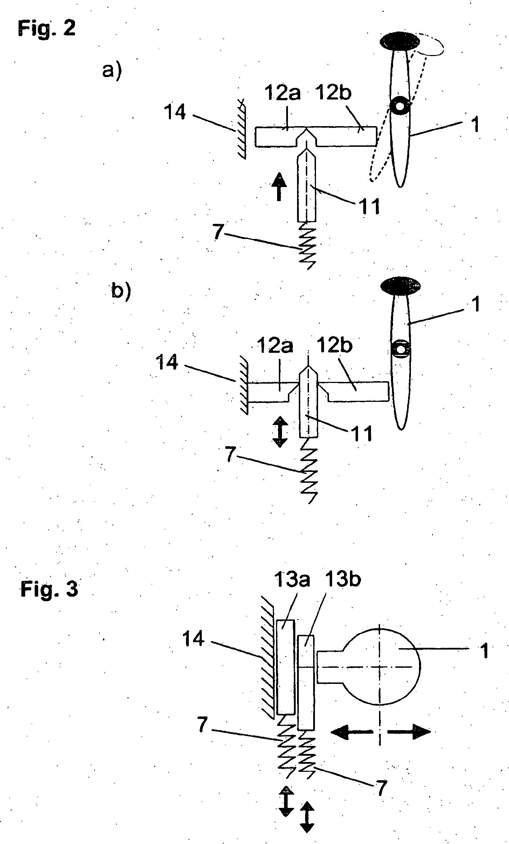

Eine alternativ ausgeführte Schalteinrichtung ist in der Figur 2 dargestellt. Ein Stößel (11) wird durch einen nichtdargestellten Aktuator zwischen zwei Schieberelemente (12a, 12b) geschoben oder gezogen. Der Stößel (11) drückt dabei über schräg zueinander stehende Anlaufflächen am Stößel (11) und an den Schieberelementen (12a, 12b) das erstes Schieberelement (12a) gegen eine stützende Wand (14) eines Gehäuses. Das zweite Schieberelement (12b) wird mit derselben Bewegung ebenfalls um die halbe Breite des Stößels (11) in Richtung auf den Schalthebel (1) bewegt.

Durch die Bewegung des Schieberelements (12b) wird der Schalthebel (1) aus der ausgelenkten Schalthebelstellung zurück in die neutrale Schalthebelstellung bewegt (Figur 2a). Verbleibt der Stößel (11) zwischen den beiden Schieberelementen (12a, 12b), so ist der Schalthebelweg entsprechend der Darstellung der Figur 2b begrenzt, der Schalthebel (1) ist somit gesperrt. Wird nun der Schalthebel (1) gegen das zweite Schieberelement (12b) gedrückt, so wird die zu haltende Kraft über das zweite Schieberelement (12b), den Stößel (11) und das erste Schieberelement (12a) auf die stützende Wand (14) geleitet.

Optional kann der Stößel (11) durch eine auf den Stößel (11) oder den Aktuator wirkende Rückstellfeder (7) monostabil ausgeführt sein. Wird der Aktuator nicht betätigt oder fällt aufgrund eines Defektes aus, so führt die Feder (7) den Stößel in die Grundposition zurück und gibt die Schieberelemente (12a, 12b) frei. Dadurch kann beispielsweise eine Notlauffunktion realisiert sein, in der die Schaltwege nicht begrenzt sind.

Ein weitere Ausführung der Erfindung zeigt als Prinzipdarstellung die Figur 3. Dargestellt ist ein Querschnitt eines Schalthebels (1) mit zwei einander entgegengesetzten möglichen Betätigungsrichtungen sowie ein Ausschnitt aus einer feststehende Wand (14) eines Schalthebelgehäuse.

Es ist wenigsten ein linear geführter Schieber vorgesehen, der durch einen nicht dargestellten Aktuator zwischen die Wand (14) des Gehäuses und den Schalthebel (1) geschoben oder gezogen werden kann. Die Breite des Schiebers bestimmt die Wegbegrenzung des Schalthebels (1). Wird eine Begrenzung in mehreren Stufen gefordert, so können mehrere Schieber (13a, 13b) gleichzeitig durch mehrere Aktuatoren bewegt werden. Hierbei stützt sich der erste Schieber (13a) an der Wand (14) und alle folgenden Schieber (13b) auf dem jeweils vorhergehenden Schieber (13a) ab. Die aufgenommen Kräfte werden auf die verstärkt ausgeführte Gehäusewand (14) geleitet.

Um den Schalthebel (1) in zwei einander gegenüberliegenden Betätigungsrichtungen zu sperren, muß das Sperrsystem jeweils für jede Betätigungsrichtung aufgebaut werden.

Optional kann das Sperrensystem monostabil ausgeführt sein. Hierzu werden die Schieber (13a, 13b) über Rückstellfedern (7), die entweder an den Aktuatoren oder direkt an den Schiebern (13a, 13b) angelenkt sind, in einer Grundposition gehalten. Werden die Aktuatoren nicht betätigt oder fallen diese aufgrund eines Defektes aus, so führen die Federn (7) die Schieber (13a, 13b) in die Grundposition zurück und ermöglichen eine ungesperrte Schalthebelbetätigung als Notlauffunktion.

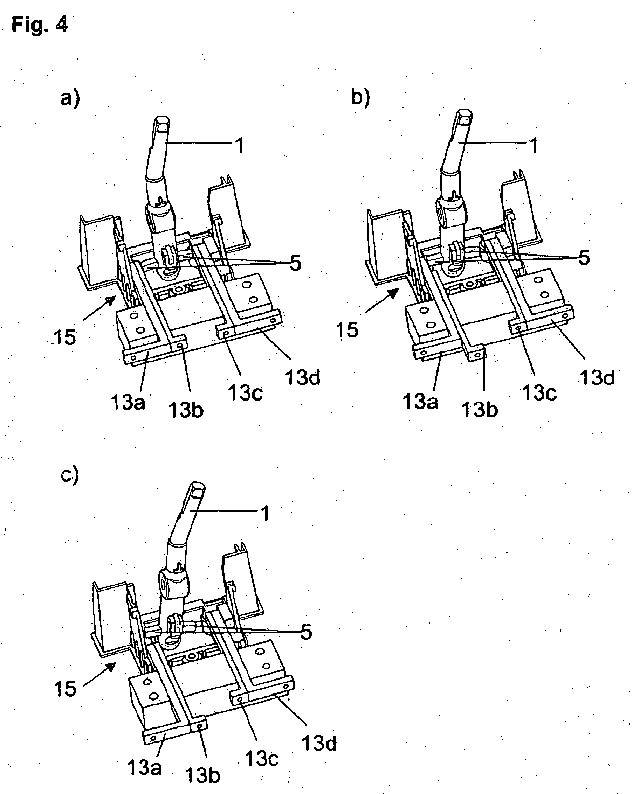

Eine konkretere Darstellung einer elektrischen Schalteinrichtung mit einer durch mehrere Schieber realisierten Betätigungswegbegrenzung für einen Schalthebel ist in den Figuren 4a bis 4c dargestellt. Die Figuren zeigen ein Schalthebelgehäuse (15) mit einem darin angeordneten Schalthebel (1), der zumindest in einer, etwa parallel zu Zeichenebene gelegenen Ebene verschwenkbar ist. In dieser Betätigungsebene erstrecken sich auch zwei stiftförmige Anformungen (5) am Schalthebel (1).

Am Schalthebelgehäuse (15) sind vier als L-förmige Profile ausgebildete Schieber (13a, 13b, 13c, 13d) angeordnet, wobei die längeren Schenkel von jeweils zwei Schieber parallel aneinander anliegen und die kürzere Schenkel sich jeweils in zueinander gegenüberliegende Richtung erstrecken.

Die Schieber (13a, 13b, 13c, 13d) sind beweglich am Schalthebelgehäuse (15) angeordnet und können durch einen oder mehrere, aus Gründen der Übersichtlichkeit hier nicht abgebildete Aktuatoren relativ zum Schalthebelgehäuse (15) verschoben werden. Dabei ist für jeden Schieber (13a, 13b, 13c, 13d) eine Position erreichbar, in der ein Endabschnitt bis in die Schwenkebene des Schalthebels (1) ragt. Da in dieser Position bei einer Bewegung des Schalthebels (1) die stiftförmigen Anformungen (5) auf die Schieber (13a, 13b, 13c, 13d) treffen, wird hierdurch der Betätigungsweg des Schalthebels (1) mehr oder weniger stark begrenzt.

Die Figuren 4a bis 4c zeigen die Schieber (13a, 13b, 13c, 13d) in verschiedenen Positionen. In der Figur 4a liegen die Endabschnitte aller vier Schieber (13a, 13b, 13c, 13d) in der Schwenkebene des Schalthebels (1). Da damit praktisch kein Freiraum mehr zwischen den stiftförmigen Anformungen (15) und den Schiebern (13a, 13b, 13c, 13d) zur Verfügung steht, ist die Beweglichkeit des Schalthebels (1), zumindest in der Links-/Rechtsrichtung hier maximal eingeschränkt und der Schalthebel (1) damit praktisch blockiert.

In der Figur 4b ist einer der Schieber (13b) aus dem Schwenkbereich des Schalthebels (1) entfernt; dies ermöglicht ein teilweises Verschwenken des Schalthebels (1) nach links, während eine Betätigung des Schalthebels (1) nach rechts durch die den Schalthebel (1) blockierenden Schieber 13c und 13d auch weiterhin ausgeschlossen ist.

Ein zusätzliches Entfernen des Schiebers 13a aus dem Betätigungsweg des Schalthebels (1), dargestellt in der Figur 4c, ermöglicht ein uneingeschränktes Verschwenken des Schalthebels (1) nach links.

Eine entsprechende Freigabe des Schalthebels (1) in die rechte Betätigungsrichtung kann durch eine entsprechende Steuerung der Schieber 13c und 13d erfolgen.

### Bezugszeichen

- 1: Schalthebel
- 2: Ausnehmung
- 3: Drehachse
- 4: Zwischenstück
- 5: stiftförmige Anformungen
- 6: Exzenter
- 7: (Rückstell)feder
- 8: Elektromotor (Aktuator)
- 9: Schneckengetriebe
- 10: (Exzenter)welle
- 11: Stößel
- 12a, 12b: Schieberelemente
- 13a, 13b, 13c, 13d: Schieber
- 14: Gehäusewand
- 15: (Schalthebel)gehäuse
- A, B: Positionen (des Exzenters)

## Patentansprüche

1. Elektrische Schalteinrichtung für ein Kraftfahrzeug, mit einem Schalthebel (1) und mit einem elektrischen Aktuator (8), der **dadurch**, dass in mindestens einem Betätigungsweg des Schalthebels (1) ein Begrenzungselement (6; 12a, 12b) angeordnet ist, dessen Ausdehnung innerhalb eines Betätigungsweges des Schalthebels (1) durch den Aktuator (8) veränderbar ist, einen Schaltanschlag für den Schalthebel (1) in bzw. außer Kraft setzen kann, **dadurch gekennzeichnet, dass** der Aktuator (8) durch eine Veränderung der Ausdehnung des Begrenzungselements (6; 12a, 12b) innerhalb eines Betätigungsweges des Schalthebels (1), die Position des Schalthebels (1) verändern kann.

2. Elektrische Schalteinrichtung nach Anspruch 1, **dadurch gekennzeichnet, dass** das Begrenzungselement durch einen drehbaren Exzenter (6) gebildet ist.

3. Elektrische Schalteinrichtung nach Anspruch 2, **dadurch gekennzeichnet, dass** der Exzenter (6) durch einen Elektromotor (8) angetrieben ist.

4. Elektrische Schalteinrichtung nach Anspruch 2, **dadurch gekennzeichnet, dass** der Exzenter (6) durch einen Linearaktuator über einen Kurbeltrieb angetrieben ist.

5. Elektrische Schalteinrichtung nach Anspruch 1, **dadurch gekennzeichnet, dass** das Begrenzungselement durch zwei gegeneinander verschieblich angeordnete Schieberelemente (12a, 12b) gebildet ist.

6. Elektrische Schalteinrichtung nach Anspruch 5, **dadurch gekennzeichnet, dass** die Schieberelemente (12a, 12b) durch einen in senkrechter Richtung zu deren Verschieberichtung wirkenden Stößel (11) gegeneinander verschieblich sind.

7. Elektrische Schalteinrichtung nach Anspruch 1, **dadurch gekennzeichnet, dass** eine Feder (7) vorgesehen ist, die bei unbetätigtem Aktuator (8) das Begrenzungselement in seine Ausgangsstellung zurückführt.

8. Elektrische Schalteinrichtung nach Anspruch 1, **dadurch gekennzeichnet, dass** der Schalthebel (1) ein Gangwahlschalter ist.

9. Elektrische Schalteinrichtung nach Anspruch 1, **dadurch gekennzeichnet, dass** der Aktuator (8) durch eine Veränderung der Ausdehnung des Begrenzungselements (6; 12a, 12b) innerhalb eines Betätigungsweges des Schalthebels (1), den ausgelenkten Schalthebel (1) in die neutrale Schalthebelposition zurückstellen kann.

## Claims

1. Electrical switching facility for a motor vehicle, having a shift lever (1) and having an electrical actuator (8) which, due to the fact that a limiting element (6; 12a, 12b) is located in at least one operating path of the shift lever (1) whose expanse within an operating path of the shift lever (1) can be altered by the actuator (8), can put a switching stop for the shift lever (1) into or out of operation, **characterised in that** the actuator (8) can change the position of the shift lever (1) by way of a change in the expanse of the limiting element (6; 12a, 12b) within an operating path of the shift lever (1).

2. Electrical switching facility according to Claim 1, **characterised in that** the limiting element is formed by a rotatable eccentric (6).

3. Electrical switching facility according to Claim 2, **characterised in that** the eccentric (6) is driven by an electric motor (8).

4. Electrical switching facility according to Claim 2, **characterised in that** eccentric (6) is driven by a linear actuator via a crank assembly.

5. Electrical switching facility according to Claim 1, **characterised in that** the limiting element is formed by two slider elements (12a, 12b) which are slideably arranged opposing each other.

6. Electrical switching facility according to Claim 5, **characterised in that** the slider elements (12a, 12b) are slideable opposing each other due to a tappet (11) acting in the perpendicular direction to its sliding direction.

7. Electrical switching facility according to Claim 1, **characterised in that** a spring (7) is provided which restores the limiting element to its starting position when the actuator (8) is not operated.

8. Electrical switching facility according to Claim 1, **characterised in that** the shift lever (1) is a gear selector switch.

9. Electrical switching facility according to Claim 1, **characterised in that** the actuator (8) can restore the deflected shift lever (1) to its neutral shift lever position by means of a change in the expanse of the limiting element (6; 12a, 12b) within an operating path of the shift lever (1).

## Revendications

1. Système électrique de commutation pour un véhicule automobile, avec un levier de commutation (1) et avec un actionneur électrique (8), qui, du fait que, dans au moins une course de commande du levier de commutation (1), est disposé un élément de limitation (6 ; 12a, 12b), dont la portée dans la course de commande du levier de commutation (1) peut être modifiée par l'actionneur (8), peut mettre en service, respectivement hors de service une butée de commutation pour ledit levier de commutation (1), **caractérisé en ce que** l'actionneur (8) peut modifier la position du levier de commutation (1), par une modification de la portée de l'élément de limitation (6 ; 12a, 12b) dans une course de commande du levier de commutation (1).

2. Système électrique de commutation selon la revendication 1, **caractérisé en ce que** l'élément de limitation est formé par un excentrique rotatif (6).

3. Système électrique de commutation selon la revendication 2, **caractérisé en ce que** l'excentrique (6) est entraîné par un moteur électrique (8).

4. Système électrique de commutation selon la revendication 2, **caractérisé en ce que** l'excentrique (6) est entraîné par un actionneur linéaire par l'intermédiaire d'un mécanisme à bielle.

5. Système électrique de commutation selon la revendication 1, **caractérisé en ce que** l'élément de limitation est formé par deux éléments coulissants (12a, 12b), qui peuvent être déplacés l'un par rapport à l'autre.

6. Système électrique de commutation selon la revendication 5, **caractérisé en ce que** les éléments coulissants (12a, 12b) peuvent être déplacés l'un par rapport à l'autre par un poussoir (11), qui agit perpendiculairement à leur direction de déplacement.

7. Système électrique de commutation selon la revendication 1, **caractérisé en ce qu'**est prévu un ressort (7), qui ramène l'élément de limitation dans sa position de départ quand l'actionneur (8) est inactif.

8. Système électrique de commutation selon la revendication 1, **caractérisé en ce que** le levier de commutation (1) est un levier de changement de vitesse.

9. Système électrique de commutation selon la revendication 1, **caractérisé en ce que** l'actionneur (8) peut remettre le levier de commutation (1) dévié dans la position neutre dudit levier de commutation (1) par une modification de la portée de l'élément de limitation (6 ; 12a, 12b) dans une course de commande du levier de commutation.
